# EUROPÄISCHE PATENTSCHRIFT

(11) **EP 2 163 407 B1**
(45) Veröffentlichungstag und Bekanntmachung des Hinweises auf die Patenterteilung: **05.06.2013**
(21) Anmeldenummer: 09010858.0
(22) Anmeldetag: 25.08.2009
(51) Int. Cl.: B60C 23/04

(54) **System zum Überwachen des Reifendrucks in Fahrzeugen**
System for monitoring tyre pressure in vehicles
Système de surveillance de la pression des pneus dans des véhicules

(30) Priorität: 04.09.2008 DE 102008045867
(43) Veröffentlichungstag der Anmeldung: 17.03.2010
(73) Patentinhaber: Huf Hülsbeck & Fürst GmbH & Co. KG, 42551 Velbert (DE)
(72) Erfinder: Kessler, Ralf, 76327 Pfinztal (DE); Köninger, Holger, 75045 Walzbachtal (DE); Sandrock, Karsten, 75015 Bretten (DE)
(74) Vertreter: Twelmeier Mommer & Partner

(56) Entgegenhaltungen:
- WO-A1-2009/132624

## Beschreibung

Die Erfindung geht aus von einem System mit den im Oberbegriff des Anspruchs 1 angegebenen Merkmalen, wie es aus der EP 1 053 114 B1 bekannt ist.

In den Luftreifen eines Fahrzeugs angeordnete Reifendruckkontrolleinrichtungen eines solchen Systems senden Drucksignale jeweils zusammen mit einer charakteristischen Kennung aus, die es einer ortsfest am Fahrzeug angeordneten Auswerteeinheit ermöglicht, die Drucksignale den einzelnen Rädern des Fahrzeugs zuzuordnen. Da die Reifen eines Fahrzeugs und damit die in ihnen angeordneten Reifendruckkontrolleinrichtungen vertauscht oder ausgewechselt werden können, muss die Auswerteeinheit nach jedem Fahrtbeginn erneut eine Zuordnung der charakteristischen Kennungen zu den jeweiligen Radpositionen vornehmen. Diese Zuordnung wird mittels einer statistischen Auswertung des Empfangspegels vorgenommen. Signale von Reifendruckkontrolleinrichtungen in Fahrzeugreifen, die näher an einem Empfänger der Auswerteeinheit angeordnet sind, werden nämlich im zeitlichen Mittel mit einem größeren Empfangspegel empfangen als Signale von Reifendruckkontrolleinrichtungen in weiter entfernten Fahrzeugreifen.

Damit die Auswerteeinheit möglichst rasch eine für eine statistische Auswertung ausreichende Anzahl von Datentelegrammen empfängt und folglich die Zuordnung der Kennungen zu einzelnen Radpositionen möglichst frühzeitig nach Fahrtbeginn vornehmen kann, senden Reifendruckkontrolleinrichtungen, wie beispielsweise in der WO 2009/132 624 A1 gezeigt, zu Beginn einer Fahrt in verkürzten Zeitabständen.

Einerseits ist es wünschenswert, möglichst frühzeitig nach Fahrtbeginn eine eindeutige Zuordnung der Kennungen zu den einzelnen Radpositionen vornehmen zu können, was dafür spricht, die Reifendruckkontrolleinrichtungen eine größere Anzahl von Datentelegrammen in verkürzten Zeitabständen senden zu lassen. Andererseits sollen die Batterien der Reifendruckkontrolleinrichtungen durch die erhöhte Senderate bei Fahrtbeginn möglichst wenig belastet werden, was dafür spricht, möglichst schnell in einen Normalbetriebsmodus mit einer geringeren Senderate überzugehen.

Aufgabe der Erfindung ist es deshalb, ein Weg aufzuzeigen, wie bei einem System zur Überwachung des Reifendrucks in Fahrzeugen möglichst rasch nach Fahrtbeginn und mit einem möglichst geringen Sendeaufwand eine Zuordnung der charakteristischen Kennungen der einzelnen Reifendruckkontrolleinrichtungen zu den jeweiligen Radpositionen vorgenommen werden kann.

Diese Aufgabe wird durch ein System mit den im Anspruch 1 und ein Verfahren mit den im Anspruch 12 angegebenen Merkmalen gelöst. Vorteilhafte Weiterbildungen der Erfindung sind Gegenstand der Unteransprüche.

Erfindungsgemäß kann mit einem geringeren Sendeaufwand und einer größeren Zuverlässigkeit erreicht werden, dass die zentrale Auswerteeinheit zu Beginn einer Fahrt die charakteristischen Kennungen der Reifendruckkontrolleinrichtungen jeweils einer Radposition zuordnet.

Beim Übergang in den Fahrtantrittsmodus wird mit dem Aussenden eines Datenpakets aus mehreren Datentelegrammen begonnen. Nach dem Aussenden eines ersten Teils des Datenpakets, beispielsweise des ersten Datentelegramms, wird wenigstens einmal überprüft, ob der Rollsensor weiterhin eine Raddrehung detektiert, und falls dies nicht der Fall ist, das Aussenden des Datenpakets unterbrochen. Wird später festgestellt, dass die Fahrtunterbrechung nur von kurzer Dauer, beispielsweise weniger als 5 Minuten war, wird erfindungsgemäß das Aussenden des Datenpakets an der unterbrochenen Stelle fortgesetzt. Wird die Fahrt erst nach einer längeren Pause, in der ein Reifenwechsel hätte erfolgen können, fortgesetzt, wird erneut mit dem Aussenden des Datenpakets begonnen. Auf diese Weise wird erreicht, dass jede Reifendruckkontrolleinrichtung in dem Fahrtantrittsmodus stets die für eine zuverlässige Zuordnung ihrer Kennung erforderliche Anzahl von Datentelegrammen bei drehendem Rad aussendet.

Das Senden bei drehendem Rad ist bedeutsam, da der Empfangspegel, mit dem Datentelegramme einer Reifendrucküberwachungseinheit empfangen werden, nicht nur von dem Abstand des betreffenden Rades von dem Empfänger abhängt. Bei einer Raddrehung ändern sich nämlich die Reflexionsverhältnisse und die Orientierung des Senders einer Reifendrucküberwachungseinheit in Bezug auf einen ortsfest am Fahrzeug angeordneten Empfänger, was den Empfangspegel beeinflusst.

Wenn ein Fahrzeug kurz nach einem Ansprechen des Rollsensors wieder anhält, kann es deshalb vorkommen, dass die statistische Auswertung der Empfangspegel einzelner Datentelegramme durch eine besonders günstige oder ungünstige Orientierung des Senders der Reifendruckkontrolleinrichtung verfälscht wird. Bei stillstehendem Fahrzeug gesendete Datentelegramme sind deshalb für eine Zuordnung der Kennungen zu den einzelnen Radpositionen oft unbrauchbar und können sogar zu einer fehlerhaften Zuordnung führen, die erst sehr viel später nach Empfang von weiteren Datentelegrammen, die im Normalbetriebsmodus gesendet wurden, korrigiert werden kann. Der mit dem Aussenden von Signalen, die wegen der Position der Reifendrucküberwachungseinrichtung nicht oder nur eingeschränkt ausgewertet werden können, verbundene Energieaufwand lässt sich erfindungsgemäß weitgehend einsparen.

Um die statistische Auswertung der Empfangspegel zu ermöglichen, kann beispielsweise ein Empfänger der zentralen Auswerteeinheit in der Nähe einer Fahrzeugachse verbaut werden. Datentelegramme von Reifendruckkontrolleinrichtungen, die an den Rädern dieser Achse verbaut sind, werden dann im Mittel mit einem höheren Empfangspegel empfangen, als Datentelegramme von Reifendruckkontrolleinrichtungen der Räder der weiter entfernten Achse. Eine Unterscheidung zwischen linken und rechten Rädern kann beispielsweise dadurch vorgenommen werden, dass die Reifendruckkontrolleinrichtungen einen Sensor enthalten, der die Drehrichtung eines Rades erfasst. Möglich ist es auch, einen Empfänger der Auswerteeinheit so am Fahrzeug anzuordnen, dass er von allen Rädern einen unterschiedlichen Abstand hat, so dass durch eine statistische Auswertung des Empfangspegels nicht nur ermittelt werden kann, an welcher Achse das Rad der Reifendruckkontrolleinrichtung befestigt ist, sondern die Radposition insgesamt bestimmt werden kann. Möglich ist es insbesondere auch, die Auswerteeinheit mit mehreren Empfängern auszurüsten, die an unterschiedlichen Positionen angeordnet sind, um die statistische Auswertung zu verbessern.

Eine vorteilhafte Weiterbildung der Erfindung sieht vor, dass aus dem Normalbetriebsmodus nur dann in den Fahrtantrittsmodus gewechselt wird, wenn der Rollschalter zuvor während einer vorgegebenen Zeitdauer keine Raddrehung detektiert hat. Auf diese Weise kann verhindert werden, dass im Stop-and-Go-Verkehr nach jedem Fahrzeugstopp der Fahrtantrittsmodus von neuem durchlaufen und dabei ein Datenpaket mit einer größeren Anzahl von Datentelegrammen gesendet wird.

Eine weitere vorteilhafte Weiterbildung der Erfindung sieht vor, dass der erste Teil des Datenpakets mehrere Datentelegramme enthält, also eine Überprüfung des Rollschalters und ein Unterbrechen des Sendens, falls bei der Überprüfung keine Raddrehung detektiert wird, erst stattfindet, nachdem beispielsweise mindestens 3, vorzugsweise 4 bis 6 Datentelegramme gesendet wurden. Falls bei dem parkenden Fahrzeug einer der Reifen übermäßig viel Luft verloren hat, ist es nämlich vorteilhaft, diese Information dem Fahrer des Fahrzeugs möglichst frühzeitig zu übermitteln, selbst wenn die zentrale Auswerteeinheit zu diesem Zeitpunkt noch nicht ermitteln konnte, welcher der Reifen platt ist. Indem bei einem Ansprechen des Rollschalters selbst bei einem unmittelbar darauf folgenden Fahrzeugstopp hintereinander mehrere Datentelegramme gesendet werden, kann die Wahrscheinlichkeit deutlich erhöht werden, dass zumindest eines dieser Datentelegramme empfangen und somit die Auswerteeinheit die Information erhält, dass ein Reifen zu wenig Luft hat. Eine Zuordnung der Kennungen der Datentelegramme zu den einzelnen Radpositionen kann an einem zweiten Teil des Datenpakets vorgenommen werden, der nur dann gesendet wird, wenn bei der Abfrage des Rollschalters festgestellt wird, dass sich das Rad weiterhin dreht.

Gegenüber dem Stand der Technik lässt sich eine wesentliche Verbesserung bereits dadurch erzielen, dass beim Aussenden eines Datenpakets in dem Fahrtantrittsmodus ein einziges Mal überprüft wird, ob der Rollsensor weiterhin eine Raddrehung detektiert. Um die Gefahr des Sendens unbrauchbarer Datentelegramme weiter zu reduzieren, können während des Aussenden eines Datenpakets aber auch mehrere Überprüfungen des Rollsensors und Unterbrechungen vorgenommen werden, beispielsweise nach dem Aussenden jedes fünften Datentelegramms, nach dem Aussenden jedes dritten Datentelegramms oder sogar nach jedem Datentelegramm, so dass das Datenpaket nicht in nur zwei Teilen, sondern in drei, vier oder noch mehr Teilen gesendet wird.

Weitere Einzelheiten eines erfindungsgemäßen Systems werden an dem Ausführungsbeispiel unter Bezugnahme auf die beigefügte Figur erläutert. Es zeigt:

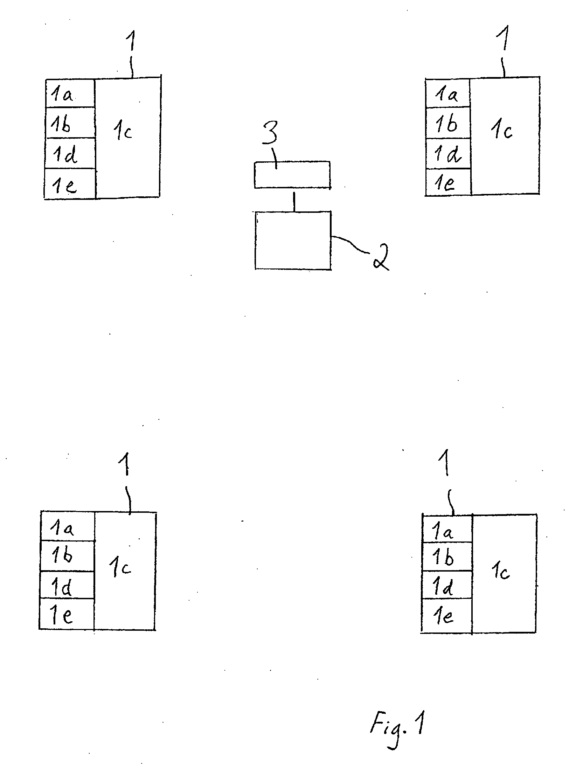

- Figur 1:: eine schematische Darstellung eines erfindungsgemäßen Reifendrucküberwachungssystems;
- Figur 2:: ein schematisches Diagramm des Ablaufs eines Ausführungsbeispiels eines Verfahrens, dass in einer Reifendruckkontrolleinrichtung zur Steuerung der Sendetätigkeit durchgeführt wird.

Ein System zum Überwachen des Reifendrucks in Fahrzeugen umfasst mehrere Reifendruckkontrolleinrichtungen 1, die jeweils in einem der Luftreifen eines Fahrzeugs angeordnet sind und einen Drucksensor 1a, einen Rollsensor 1b, eine Steuereinheit 1c, eine Stromquelle 1d und einen Sender 1e aufweisen. Zu dem System gehören außerdem eine ortsfest am Fahrzeug angeordnete Auswerteeinheit 2, um von den Reifendruckkontrolleinrichtungen 1 gesendete Datentelegramme, die jeweils eine Druckinformation und eine charakteristische Kennung der sendenden Reifendruckkontrolleinrichtung enthalten, auszuwerten. An die Auswerteeinheit 2 ist ein Empfänger 3 angeschlossen.

Da die Reifen eines Fahrzeugs und damit die in ihnen angeordneten Reifendruckkontrolleinrichtungen 1 ausgewechselt werden können, überprüft die Auswerteeinheit 2 bei jedem Fahrtbeginn die vorhandene Zuordnung der charakteristischen Kennungen zu den einzelnen Radpositionen und führt gegebenenfalls einen Lernprozess durch, mit dem eine erneute Zuordnung von charakteristischen Kennungen zu den einzelnen Radpositionen vorgenommen wird. Bei diesem Lernprozess wird eine statistische Auswertung der Empfangspegel der von den verschiedenen Reifendruckkontrolleinrichtungen 1 gesendeten Datentelegramme vorgenommen. Der Empfänger 3 der Auswerteeinheit 2 ist bei dem dargestellten Ausführungsbeispiel nahe an der Vorderachse des Fahrzeuges angeordnet, so dass Datentelegramme von Vorderrädern im Mittel mit einem größeren Empfangspegel, also einer stärkeren Intensität, als Datentelegramme von Reifendruckkontrolleinrichtungen 1 der Hinterräder empfangen werden. Der Rollsensor 1b der Reifendruckkontrolleinrichtungen 1 ist sensitiv für den Drehsinn des Rades, so dass die gesendeten Datentelegramme zusätzlich zu der Druckinformation und der charakteristischen Kennung auch die Information enthalten, ob sich das betreffende Rad links oder rechts herum dreht.

In einem Normalbetriebsmodus senden die Reifendruckkontrolleinrichtungen 1 die Datentelegramme in ersten Zeitabständen aus, die bevorzugt von der Fahrzeuggeschwindigkeit abhängen. Auf diese Weise kann erreicht werden, dass bei höheren Geschwindigkeiten in kürzeren Zeitabständen Datentelegramme gesendet werden als bei langsamer Fahrt, die ein kleineres Risiko bedeutet. Der Abstand zwischen Datentelegrammen kann beispielsweise ungekehrt proportional zur Fahrzeuggeschwindigkeit sein. Bevorzugt ist es jedoch, dass die Zeitabstände zwischen Datentelegrammen stufenweise an eine Änderung der Fahrzeuggeschwindigkeit angepasst werden.

Die Reifendruckkontrolleinrichtungen 1 wechseln aus dem Normalbetriebsmodus in einen Druckabfallmodus, wenn eine Überprüfung der von dem Drucksensor 1a gelieferten Drucksignale ergibt, dass ein Druckabfall vorliegt, dessen Druckabfallgeschwindigkeit einen vorgegebenen Schellenwert übersteigt. Diese Überprüfung wird von den Steuereinheiten 1c der Reifendruckkontrolleinrichtungen 1 vorgenommen. Im einfachsten Fall genügt dafür ein Vergleicher, der die Differenz eines Druckmesswerts zu einem vorhergehenden Druckmesswert mit einem vorgegebenen Schwellenwert vergleicht. Wird eine gefährlich hohe Druckabfallgeschwindigkeit festgestellt, werden Datentelegramme in zweiten Zeitabständen gesendet, die kürzer als die ersten Zeitabstände sind. Beispielsweise können die ersten Zeitabstände bei einer Fahrt von 50 km/h 1 bis 2 Minuten betragen, während die zweiten Zeitabstände nur 1 bis 2 Sekunden betragen.

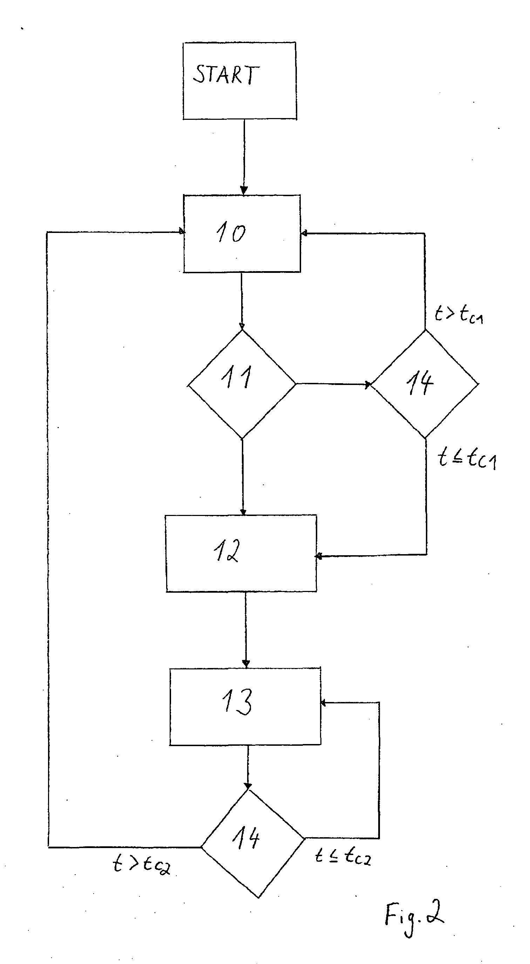

In einem Fahrtantrittsmodus zu Beginn einer Fahrt senden die Reifendruckkontrolleinrichtungen 1 die Datentelegramme in gegenüber dem Normalbetrieb verkürzten dritten Zeitabständen, um der Auswerteeinheit 2 eine möglichst schnelle Zuordnung der charakteristischen Kennungen zu den jeweiligen Radposition zu ermöglichen. Im Folgenden wird unter Bezugnahme auf Figur 2 erläutert, wie die Sendetätigkeit in dem Fahrtantrittsmodus gesteuert wird.

Das Ablaufdiagramm in Figur 2 beginnt mit einem Ansprechen des Rollsensors 1b nach einem längeren Stillstand des Fahrzeugs. Das Ansprechen des Rollsensors 1b bewirkt, dass die Reifendruckkontrolleinrichtung 1 mit dem Aussenden eines Datenpakets aus einer vorgegebenen Anzahl von Datentelegrammen beginnt. Dabei wird zunächst ein erster Teil des Pakets mit einer vorgegebene Anzahl von Datentelegrammen in dritten Zeitabständen ausgesendet wird, die deutlich kürzer als die ersten Zeitabstände des Normalbetriebs sind. Dieser Verfahrensschritt ist in Figur 2 durch den Kasten 10 dargestellt. Der erste Teil des Pakets enthält bevorzugt mindestens 3, insbesondere mindestens 4, beispielsweise 5, Datentelegramme. Die dritten Zeitabstände sind vorzugsweise konstant und können beispielsweise eine bis fünf Sekunden betragen. Die Datentelegramme des ersten Teils dienen in erster Linie dazu, der zentralen Auswerteeinheit 2 möglichst frühzeitig die Information zu übermitten, ob bei einem der Fahrzeugreifen ein die Fahrtüchtigkeit beeinträchtigender Druckverlust aufgetreten ist.

Anschließend wird in einem Verfahrensschritt 11 überprüft, ob der Rollsensor 1b weiterhin eine Raddrehung detektiert. Falls dies der Fall ist, sendet die Reifendruckkontrolleinrichtung 1 in einem Verfahrensschritt 12 einen zweiten Teil des Datenpakets aus und wechselt nach dem Aussenden des letzten Datentelegramms des zweiten Teils und damit des letzten Datentelegramms des Pakets in den durch das Kästchen 13 symbolisierten Normalbetriebsmodus. Bei dem dargestellten Ausführungsbeispiel enthält der zweite Teil des Pakets weitere 20 Datentelegramme, die ebenfalls in den dritten Zeitabständen, beispielsweise im Abstand von jeweils 2 Sekunden, ausgesendet werden. Wird in dem Verfahrensschritt 11 jedoch festgestellt, dass der Rollsensor 1b keine Raddrehung mehr detektiert, wird die Sendetätigkeit in einem Verfahrenschritt 14 unterbrochen, bis der Rollsensor 1b erneut anspricht.

Beim erneuten Ansprechen des Rollsensors 1b wird in dem Verfahrensschritt 14 überprüft, wie viel Zeit t seit dem letzten Ansprechen vergangen ist. Ist diese Zeit t größer als eine vorgegeben kritische Zeitspanne t_{C1} wird erneut mit dem Aussenden des Datenpakets begonnen, also gemäß dem Verfahrensschritt 10 dessen erster Teil ausgesendet. Ist die Zeit t kleiner als eine vorgegebene kritische Zeitspanne t_{C1}, wird die unterbrochene Sendetätigkeit fortgesetzt und der zweite Teil des Datenpakets gemäß dem Verfahrensschritt 12 ausgesendet. Bei dem dargestellten Ausführungsbeispiel sendet die Reifendruckkontrolleinrichtung 1 dann also 20 Datentelegramme im Abstand von jeweils 2 Sekunden aus und wechselt anschließend in den Normalbetriebsmodus 13.

Wird im Normalbetriebsmodus 13 mit dem Rollsensor 1b keine Raddrehung mehr detektiert, hängt die weitere Sendetätigkeit davon ab, wie viel Zeit t bis zu einem erneuten Ansprechen des Rollsensors 1b vergeht. In einem Verfahrensschritt 14 wird überprüft, ob die Zeit t größer als eine vorgegebene Zeitdauer t_{C2} ist oder nicht. Hat der Rollsensor 1b vor seinem Ansprechen während der Zeitdauer t_{C2} oder länger keine Raddrehung mehr detektiert, wird bei einem erneuten Ansprechen des Rollsensors 1b in den Fahrtantrittsmodus gewechselt, also gemäß dem Verfahrensschritt 10 mit dem Aussenden des ersten Teils eines Pakets aus Datentelegrammen begonnen. Falls die Fahrt nur für kurze Zeit unterbrochen wurde, also der Rollsensor bereits nach einer Zeit t anspricht, die kleiner als die Zeitdauer t_{C2} ist, wird die Sendetätigkeit im Normalbetriebsmodus 13 fortgesetzt.

Die vorgegebene Zeitspanne t_{C1} kann gleich sein mit der vorgegebenen Zeitdauer t_{C2}, muss es jedoch nicht sein. Die vorgegebene Zeitdauer t_{C2} beträgt bevorzugt mindestens 10 Minuten, vorzugsweise 15 Minuten bis 30 Minuten.

## Patentansprüche

1. System zum Überwachen des Reifendrucks in Fahrzeugen, mit Reifendruckkontrolleinrichtungen (1), die jeweils in einem der Luftreifen des Fahrzeugs angeordnet sind und einen Drucksensor (1a), einen Rollsensor (1b), eine Steuereinheit (1c), eine Stromquelle (1d) und einen Sender (1e) aufweisen,
einer ortsfest am Fahrzeug angeordneten Auswerteeinheit (2) mit einem Empfänger (3), um von den Reifendruckkontrolleinrichtungen (1) gesendete Datentelegramme, die jeweils eine Druckinformation und eine charakteristische Kennung der sendenden Reifendruckkontrolleinrichtung (1) enthalten, auszuwerten, wobei die Reifendruckkontrolleinrichtungen (1) in einem Normalbetriebsmodus (13) die Datentelegramme in ersten Zeitabständen aussenden, aus dem Normalbetriebsmodus (13) in einen Druckabfallmodus wechseln, wenn eine Überprüfung von Drucksignalen ergibt, dass ein Druckabfall vorliegt, dessen Druckabfallgeschwindigkeit einen vorgegebenen Schwellenwert übersteigt, und in dem Druckabfallmodus die Datentelegramme in zweiten Zeitabständen senden, die kürzer als die ersten Zeitabstände sind,
die Auswerteeinheit (2) zu Beginn einer Fahrt mittels einer statischen Auswertung des Empfangspegels von Datentelegrammen den charakteristischen Kennungen jeweils eine Radposition zuordnet, und
ein Ansprechen des Rollsensors (1b) zu Beginn einer Fahrt bewirkt, dass die betreffende Reifendruckkontrolleinrichtungen (1) in einen Fahrtantrittsmodus (10, 11, 12) übergehen, in dem die Datentelegramme in gegenüber dem Normalbetriebsmodus (13) verkürzten dritten Zeitabständen gesendet werden, um der Auswerteeinheit (2) eine möglichst schnelle Zuordnung der charakteristischen Kennungen zu den jeweiligen Radpositionen zu ermöglichen,
**dadurch gekennzeichnet, dass**
die Reifendruckkontrolleinrichtungen (1) nach einem Übergang in den Fahrtantrittsmodus jeweils mit dem Aussenden eines Datenpakets aus mehreren Datentelegrammen beginnen,
nach dem Aussenden eines ersten Teils des Datenpakets überprüft wird, ob der Rollensensor (1b) weiterhin eine Raddrehung detektiert, und falls dies nicht der Fall ist, das Aussenden des Datenpakets unterbrochen wird, wobei
mit dem Aussenden des Datenpakets fortgefahren wird, wenn der Rollsensor (1b) innerhalb einer vorgegebenen Zeitspanne (t_{C1}) erneut anspricht, und mit dem Aussenden des Datenpakets erneut begonnen wird, wenn der Rollsensor (1 b) erst nach Ablauf der vorgegebenen Zeitspanne (t_{C1}) erneut anspricht,
und wobei die Reifendruckkontrolleinrichtungen (1) jeweils nach dem vollständigen Aussenden eines Datenpakets in den Normalbetriebsmodus (13) übergehen.

2. System nach Anspruch 1, **dadurch gekennzeichnet, dass** die vorgegebene Zeitspanne eine Dauer von 5 Minuten bis 30 Minuten, vorzugsweise von 10 Minuten bis 20 Minuten hat.

3. System nach einem der vorstehenden Ansprüche, **dadurch gekennzeichnet, dass** die Anzahl der Datentelegramme des Datenpakets vorgegeben ist.

4. System nach einem der vorstehenden Ansprüche, **dadurch gekennzeichnet, dass** das Datenpaket insgesamt 15 bis 25 Datentelegramme enthält.

5. System nach einem der vorstehenden Ansprüche, **dadurch gekennzeichnet, dass** der erste Teil des Datenpakets mehrere Datentelegramme, vorzugsweise 4 bis 6 Datentelegramme, enthält.

6. System nach einem der vorstehenden Ansprüche, **dadurch gekennzeichnet, dass** nach dem Aussenden eines zweiten Teils des Datenpakets überprüft wird, ob der Rollensensor (1b) weiterhin eine Raddrehung detektiert, und falls dies nicht der Fall ist, das Aussenden des Datenpakets unterbrochen wird, wobei mit dem Aussenden des Datenpakets fortgefahren wird, wenn der Rollsensor (1 b) innerhalb einer weiteren vorgegebenen Zeitspanne erneut anspricht, und mit dem Aussenden des Datenpakets erneut begonnen wird, wenn der Rollsensor (1b) erst nach Ablauf der weiteren vorgegebenen Zeitspanne erneut anspricht.

7. System nach einem der vorstehenden Ansprüche, **dadurch gekennzeichnet, dass** die ersten Zeitabstände von der Fahrtgeschwindigkeit abhängen.

8. System nach einem der vorstehenden Ansprüche, **dadurch gekennzeichnet, dass** die zweiten Zeitabstände konstant sind

9. System nach einem der vorstehenden Ansprüche, **dadurch gekennzeichnet, dass** die dritten Zeitabstände konstant sind.

10. System nach einem der vorstehenden Ansprüche, **dadurch gekennzeichnet, dass** aus dem Normalbetriebsmodus (13) nur dann in den Fahrtantrittsmodus (10) gewechselt wird, wenn der Rollschalter (1b) zuvor während einer vorgegeben Zeitdauer (t_{C2}) keine Raddrehung detektiert hat.

11. System nach Anspruch 10, **dadurch gekennzeichnet, dass** die vorgegebene Zeitdauer mindestens 10 Minuten, vorzugsweise 15 Minuten bis 30 Minuten, beträgt.

12. Verfahren zum Steuern der Sendetätigkeit einer in einem Luftreifen eines Fahrzeugs angeordneten Reifendruckkontrolleinrichtung (1), wobei
in einem Normalbetriebsmodus (13) Datentelegramme in ersten Zeitabständen gesendet werden,
aus dem Normalbetriebsmodus (13) in einen Druckabfallmodus gewechselt wird, wenn eine Überprüfung von Drucksignalen ergibt, dass ein Druckabfall vorliegt, dessen Druckabfallgeschwindigkeit einen vorgegebenen Schwellenwert übersteigt, und in dem Druckabfallmodus Datentelegramme in zweiten Zeitabständen gesendet werden, die kürzer als die ersten Zeitabstände sind,
die Reifendruckkontrolleinrichtungen (1) bei Fahrtbeginn durch Ansprechen eines Rollsensors in eine Fahrtantrittsmodus (10, 11, 12) versetzt werden, in dem Datentelegramme in gegenüber dem Normalbetriebsmodus verkürzen dritten Zeitabständen gesendet werden, **dadurch gekennzeichnet, dass**
nach einem Übergang in den Fahrtantrittsmodus (10) mit dem Aussenden eines Datenpakets aus mehreren Datentelegrammen begonnen wird,
nach dem Aussenden eines ersten Teils des Datenpakets wenigstens einmal überprüft wird, ob der Rollensensor (1b) weiterhin eine Raddrehung detektiert (11), und falls dies nicht der Fall ist, das Aussenden des Datenpakets unterbrochen wird (14), wobei
mit dem Aussenden des Datenpakets fortgefahren wird (12), wenn der Rollsensor (1b) innerhalb einer vorgegebenen Zeitspanne (t_{C1}) erneut anspricht, und mit dem Aussenden des Datenpakets erneut begonnen wird (10), wenn der Rollsensor (1b) erst nach Ablauf der vorgegebenen Zeitspanne (t_{C1}) erneut anspricht,
und nach dem vollständigen Aussenden eines Datenpakets in den Normalbetriebsmodus (13) übergegangen wird.

## Claims

1. System for monitoring tire pressure in vehicles, comprising
tire pressure monitoring devices (1), which are each arranged in one of the pneumatic tires of the vehicle and each comprise a pressure sensor (1 a), a roll sensor (1b), a control unit (1c), a power source (1d) and a transmitter (1e),
an evaluation unit (2) installed on the vehicle in a stationary manner with a receiver (3) for evaluating data telegrams sent by the tire pressure monitoring devices (1), each data telegram containing a pressure information and a characteristic identifier of the transmitting tire pressure monitoring device (1), whereby
the tire pressure monitoring devices (1) transmit data telegrams in first time intervals in a normal mode of operation (13), switch from the normal mode of operation (13) to a pressure drop mode if an evaluation of pressure signals shows a pressure drop having a the pressure drop speed exceeding a pre-defined threshold value and transmit data telegrams in the pressure drop mode in second time intervals, which are smaller than the first time intervals,
the evaluation unit (2) assigns the characteristic identifiers to the respective wheel positions at the beginning of a travel by means of a statistic evaluation of the reception level of data telegrams, and
an activation of the roll sensor (1 b) at the beginning of a travel causes the corresponding tire pressure monitoring devices (1) to switch to a travel starting mode (10, 11, 12), in which the data telegrams are sent in shortened third time intervals as compared to the normal mode of operation (13) in order to enable the evaluation unit (2) an assignment of the characteristic identifiers to the respective wheel positions as quickly as possible,
**characterized in that**
the tire pressure monitoring devices (1) begin with the process of transmitting a data packet comprising several data telegrams after switching to the travel starting mode,
it is checked, after the transmission of a first part of the data packet, if the roll sensor (1b) is still detecting a turning of the wheel, and if not, the process of transmission of the data packet is interrupted, whereby
the process of transmitting the data packet is continued further if the roll sensor (1b) is re-activated within a pre-defined time span (t_{C1}), and the process of transmitting the data packet is started all over again if the roll sensor (1b) is re-activated only after the lapse of the pre-defined time span (t_{C1}),
and whereby the tire pressure monitoring devices (1) switch to the normal mode of operation (13) after complete transmission of a data packet.

2. System according to claim 1, **characterized in that** the pre-defined time span has a duration of 5 to 30 minutes, preferably 10 to 20 minutes.

3. System according to any one of the preceding claims, **characterized in that** the number of data telegrams of the data packet is pre-defined.

4. System according to any one of the preceding claims, **characterized in that** the data packet contains a total of 15 to 25 data telegrams.

5. System according to any one of the preceding claims, **characterized in that** the first part of the data packet contains several data telegrams, preferably 4 to 6 data telegrams.

6. System according to any one of the preceding claims, **characterized in that** it is checked, after the transmission of a second part of the data packet, if the roll sensor (1b) still detects a turning of the wheel, and if not, the process of transmission of the data packet is interrupted, whereby
the process of transmitting the data packet is continued if the roll sensor (1 b) is re-activated within a further pre-defined time span and the process of transmitting the data packet is started all over again if the roll sensor (1 b) is re-activated only after the lapse of the further pre-defined time span.

7. System according to any one of the preceding claims, **characterized in that** the first time intervals depend on the traveling speed.

8. System according to any one of the preceding claims, **characterized in that** the second time intervals are constant.

9. System according to any one of the preceding claims, **characterized in that** the third time intervals are constant.

10. System according to any one of the preceding claims, **characterized in that** switching from the normal mode of operation (13) to the travel starting mode (10) takes place only if the rolling switch (1b) did not detect a turning of the wheel beforehand for a pre-defined time span (t_{C2}).

11. System according to claim 10, **characterized in that** the pre-defined time span is at least 10 minutes, preferably 15 to 30 minutes.

12. Method for controlling the transmission operation of a tire pressure monitoring device (1) arranged in a pneumatic tire of a vehicle, whereby
data telegrams are transmitted in first time intervals in a normal mode of operation (13),
the tire pressure monitoring device is switched from the normal mode of operation (13) to a pressure drop mode, if an evaluation of pressure signals indicates a drop in pressure having a pressure drop speed exceeding a pre-defined threshold value, and data telegrams are transmitted in the pressure drop mode in second time intervals, which are shorter than the first,
the tire pressure monitoring device (1) is switched into a travel starting mode (10, 11, 12) at the beginning of a travel by activation of a roll sensor, wherein data telegrams are sent in the travel starting mode in third time intervals that are shorter than the first time intervals, **characterized in that**
the process of transmitting a data packet comprising several data telegrams is initiated by switching to the travel starting mode (10);
it is checked at least once, after the transmission of a first part of the data packet, if the roll sensor (1b) continues detecting a turning of the wheel (11), and if not, the process of transmission of the data packet is interrupted (14), whereby
the process of transmitting the data packet is continued further (12) if the roll sensor (1b) is re-activated within a pre-defined time span (t_{C1}), and the process of transmitting the data packet is started all over again (10) if the roll sensor (1 b) is re-activated only after the lapse of the pre-defined time span (t_{C1}).
and the tire pressure monitoring device switches to the normal mode of operation (13) after the data packet has been completely sent.

## Revendications

1. Système pour la surveillance de la pression des pneus dans les véhicules automobiles, avec des dispositifs de contrôle de la pression des pneus (1) agencés respectivement dans un pneumatique du véhicule automobile et comportant un capteur de pression (1a), un capteur de roulis (1b), une unité de commande (1c), une source de courant (1d) et un émetteur (1e), une unité d'évaluation (2) agencée fixement sur le véhicule automobile avec un récepteur (3), pour évaluer des télégrammes de données envoyés par les dispositifs de contrôle de la pression des pneus (1) et contenant chacun une information de pression et un indicateur caractéristique du dispositif de contrôle de la pression des pneus (1) expéditeur, dans lequel les dispositifs de contrôle de la pression des pneus (1) envoient les télégrammes de données selon des premiers intervalles de temps dans un mode de fonctionnement normal (13), passent du mode de fonctionnement normal (13) à un mode de baisse de pression lorsqu'une vérification de signaux de pression indique une baisse de pression dont la vitesse de baisse de pression dépasse une certaine valeur seuil prédéfinie, et envoient les télégrammes de données selon des deuxièmes intervalles de temps plus courts que les premiers intervalles de temps, dans le mode de baisse de pression,
au début d'un trajet, l'unité d'évaluation (2) attribue une position de roue à chacun des indicateurs caractéristiques, au moyen d'une évaluation statique du niveau de réception des télégrammes de données, et une réponse du capteur de roulis (1b) au début d'un trajet fait passer les dispositifs de contrôle de la pression des pneus (1) dans un mode de départ (10, 11, 12), dans lequel les télégrammes de données sont envoyés selon des troisièmes intervalles de temps plus courts par rapport au mode de fonctionnement normal (13), afin de permettre à l'unité d'évaluation (2) d'attribuer assez rapidement les indicateurs caractéristiques aux différentes positions de roue,
**caractérisé en ce que**
après le passage en mode de départ, les dispositifs de contrôle de la pression des pneus (1) commencent respectivement par envoyer un paquet de données comprenant plusieurs télégrammes de données,
après l'envoi d'une première partie du paquet de données, il est vérifié si le capteur de roulis (1b) détecte toujours une rotation de la roue, et si cela n'est pas le cas, l'envoi du paquet de données sera interrompu, dans lequel
l'envoi du paquet de données étant poursuivi lorsque le capteur de roulis (1b) répond à nouveau en l'espace d'un certain laps de temps (t_{C1}) prédéfini, et l'envoi du paquet de données étant recommencé lorsque le capteur de roulis (1b) ne répond à nouveau qu'après un certain laps de temps (t_{C1}) prédéfini,
et dans lequel les dispositifs de contrôle de la pression des pneus (1) passent dans le mode de fonctionnement normal (13) respectivement après l'envoi complet d'un paquet de données.

2. Système selon la revendication 1, **caractérisé en ce que** le laps de temps prédéfini dure entre 5 minutes et 30 minutes, de préférence entre 10 minutes et 20 minutes.

3. Système selon l'une des revendications précédentes, **caractérisé en ce que** le nombre de télégrammes de données du paquet de données est prédéterminé.

4. Système selon l'une des revendications précédentes, **caractérisé en ce que** le paquet de données contient au total 15 à 25 télégrammes de données.

5. Système selon l'une des revendications précédentes, **caractérisé en ce que** la première partie du paquet de données contient plusieurs télégrammes de données, de préférence entre 4 et 6 télégrammes de données.

6. Système selon l'une des revendications précédentes, **caractérisé en ce qu'**après l'envoi de la deuxième partie du paquet de données, il est vérifié si le capteur de roulis (1b) détecte toujours une rotation de la roue, et si cela n'est pas le cas, l'envoi du paquet de données sera interrompu, dans lequel l'envoi du paquet de données est poursuivi lorsque le capteur de roulis (1b) répond à nouveau en l'espace d'un autre laps de temps prédéfini, et l'envoi du paquet de données est recommencé lorsque le capteur de roulis (1b) ne répond à nouveau qu'après l'autre laps de temps prédéfini.

7. Système selon l'une des revendications précédentes, **caractérisé en ce que** les premiers intervalles de temps dépendent de la vitesse de déplacement.

8. Système selon l'une des revendications précédentes, **caractérisé en ce que** les deuxièmes intervalles de temps sont constants.

9. Système selon l'une des revendications précédentes, **caractérisé en ce que** les troisièmes intervalles de temps sont constants.

10. Système selon l'une des revendications précédentes, **caractérisé en ce que** le passage du mode de fonctionnement normal en mode de départ (10) n'aura lieu que si le capteur de roulis (1b) n'a pas détecté de rotation de la roue pendant un laps de temps prédéfini (t_{C2}).

11. Système selon la revendication 10, **caractérisé en ce que** le laps de temps prédéfini dure au moins 10 minutes, de préférence entre 15 minutes et 30 minutes.

12. Procédé pour la commande de l'activité émettrice d'un dispositif de contrôle de la pression des pneus (1) agencé dans un pneumatique d'un véhicule automobile, dans lequel
des télégrammes de données sont envoyés selon des premiers intervalles de temps dans un mode de fonctionnement normal (13),
le mode de fonctionnement normal (13) passe à un mode de baisse de pression lorsqu'une vérification de signaux de pression indique une baisse de pression dont la vitesse de baisse de pression dépasse une certaine valeur seuil prédéfinie, et des télégrammes de données sont envoyés selon des deuxièmes intervalles de temps plus courts que les premiers intervalles de temps dans le mode de baisse de pression,
une réponse du capteur de roulis au début d'un trajet fait passer les dispositifs de contrôle de la pression des pneus (1) dans un mode de départ (10, 11, 12), dans lequel les télégrammes de données sont envoyés selon des troisièmes intervalles de temps plus courts par rapport au mode de fonctionnement normal, **caractérisé en ce que**
après le passage en mode de départ (10), les dispositifs de contrôle de la pression des pneus (1) commencent respectivement par envoyer un paquet de données comprenant plusieurs télégrammes de données,
après l'envoi d'une première partie du paquet de données, il est vérifié au moins une fois si le capteur de roulis (1b) détecte toujours une rotation de la roue (11), et si cela n'est pas le cas, l'envoi du paquet de données sera interrompu (14), dans lequel l'envoi du paquet de données est poursuivi (12) lorsque le capteur de roulis (1b) répond à nouveau en l'espace d'un certain laps de temps (t_{C1}) prédéfini, et l'envoi du paquet de données est recommencé lorsque le capteur de roulis (1b) ne répond à nouveau qu'après un certain laps de temps (t_{C1}) prédéfini,
et le mode de fonctionnement normal (13) est repris après l'envoi complet d'un paquet de données.
